# EUROPEAN PATENT SPECIFICATION

(11) **EP 1 962 537 B1**
(45) Date of publication and mention of the grant of the patent: **25.05.2011**
(21) Application number: 05816644.8
(22) Date of filing: 14.12.2005
(51) Int. Cl.: H04W 72/12

(54) **SCHEDULING METHOD, BASE STATION AND TERMINAL**
SCHEDULING-VERFAHREN, BASISSTATION UND ENDGERÄT
PROCEDE D ORDONNANCEMENT, STATION DE BASE ET TERMINAL

(43) Date of publication of application: 27.08.2008
(73) Proprietor: Mitsubishi Electric Corporation, Chiyoda-ku Tokyo 100-8310 (JP)
(72) Inventor: FUKUI, Noriyuki, Chiyoda-ku, Tokyo 100-8310 (JP)
(74) Representative: Zech, Stefan Markus
(86) International application number: PCT/JP2005/022965
(87) International publication number: WO 2007/069315

(56) References cited:
- JP-A- 2003 046 482
- JP-A- 2005 094 750
- JP-A- 2005 117 654
- JP-A- 2005 520 432
- "Uplink enhancements for dedicated transport channels" INTERNET CITATION 8 November 2002 (2002-11-08), XP002258819 Retrieved from the Internet: URL:http://www.3gpp.org/ftp/tsg_ran/WG1_RL 1/TSGR1_29/Docs/Zips/ [retrieved on 2003-10-22]
- NTT DOCOMO: "Physical Channels and Multiplexing in Evolved UTRA Uplink" 3GPP DRAFT; R1-050591_PHYSICAL CHANNELS AND MULTIPLEXING IN UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sophia Antipolis, France; 20050616, 16 June 2005 (2005-06-16), XP050111409 [retrieved on 2005-06-16]

## Description

### TECHNICAL FIELD

The present invention relates to a radio communications system including at least one base station and at least one terminal that is present in a service area covered by the base station. More particularly, the present invention relates to a pilot-signal scheduling method in the communications system.

### BACKGROUND ART

For the purpose of achieving an improved average transmission rate in an uplink (from a terminal to a base station) and a wider service (coverage) area of a base station, 3GPP defines standards called "FDD Enhanced Uplink". For example, Non-patent document 1 discloses a technology to achieve the purpose. According to the technology, a base station specifies "UE pointer" indicative of a maximum transmission power (i.e., highest data-transmission rate) available for a terminal. TFC (Transport Format Combination) in "FDD Enhanced Uplink" indicates a transmission power of a terminal. The terminal can use transmission power (TFC0 to TFC10) set by the "UE pointer". The "UE pointer" is specified by "Scheduling Grant" disclosed in Non-patent document 2.

Information about allocation that is prespecified by the "Scheduling Grant" indicates the unique and highest transmission power. The information includes a unique ID of each terminal. Therefore, the terminal can determine whether "Scheduling Grant" is addressed thereto by detecting the ID. In a "FDD Enhanced Uplink" system using the above scheduling, a plurality of terminals can transmit data at the same time.

"Time Scheduling" disclosed in Non-patent document 1 restricts terminal's transmission time instead of specifying terminal's transmission power. Although fewer than those allowed to simultaneously transmit data in "Rate Scheduling", this scheduling enables a plurality of terminals to transmit data at the same time. The above-described "Time Scheduling" is not used in the final standards.

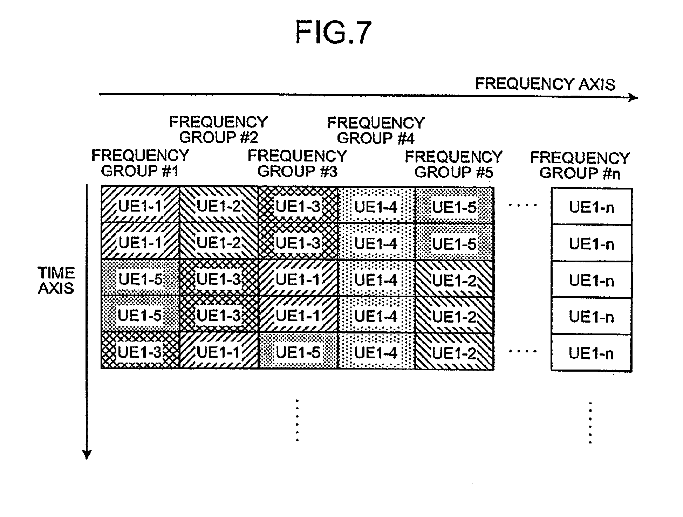

To achieve a larger capacity, the 3GPP is on study for a new radio system named "Evolved UTRA and UTRAN". A radio access system that is different from conventional 3G systems is to be used in "Evolved UTRA and UTRAN". This requires new ideas concerning peripheral technologies. In contrast to the conventional 3G systems, uplink scheduling, i.e., one of the technologies under study, allocates an available frequency and time to each of terminals (see, Fig. 7). To efficiently use communications resources (frequency and time), quality of the uplink is required to be measured. For the quality measurement, the terminals transmit a known pattern (hereinafter, "pilot signal") to a base station.

Non-patent document 1: 3GPP TR25.896 V6.0.0 7.1
Non-patent document 2: 3GPP TS25.309 V6.3.0 Section 9.1.

### DISCLOSURE OF INVENTION

### PROBLEM TO BE SOLVED BY THE INVENTION

In the conventional technologies, if each terminal transmits a pilot signal to a base station at an arbitrary timing, there is a chance that a pilot signal collides with another pilot signal or data transmitted at scheduled timing from another terminal. Although the above-described "Enhanced Uplink" scheduling, for example, allows terminals simultaneous transmission and thereby causes a chance of collisions as described above, it is possible to demodulate such collided signals or data correctly by using a "scrambling code" adopted in the conventional 3GPP technologies. However, the new radio system under study does not use the scrambling code, and therefore, there is a chance that every collided signal or data cannot be demodulated. This is why the conventional scheduling method that allows collisions cannot use any more, and there is a need of a technology for avoiding collisions.

There is another problem that if the base station does not know a timing at which each terminal transmits a pilot signal, an additional unit is required for identifying a source terminal from which a pilot signal is transmitted.

The present invention has been achieved to solve the above problems in the conventional technology and it is an object of the present invention to provide a scheduling method capable of preventing collisions between pilot signals or between a pilot signal and a data signal, and identifying a sender of a received pilot signal without using an extra unit.

### MEANS FOR SOLVING PROBLEM

To solve the problems and achieve the object mentioned above, according to the present invention, there is provided a pilot-signal scheduling method used in a radio communications system in which a base station measures reception quality based on a pilot signal received from a terminal in a service area of the base station. The pilot-signal scheduling method includes a scheduling step in which the base station generates scheduling information for specifying a time (including a start time and a cycle) for transmission of a pilot signal and a specific frequency band at which the pilot signal is to be transmitted such that transmissions of pilot signals from terminals in the service area will not overlap, and an information transmitting step in which the base station transmits the scheduling information by a predetermined transmitting process.

### EFFECT OF THE INVENTION

A scheduling method according to the present invention makes it possible to prevent collisions between pilot signals and identify a sender of a received pilot signal without using an extra unit.

### BRIEF DESCRIPTION OF DRAWINGS

[Fig. 1] Fig. 1 is a diagram for explaining the structure of a radio communications system that implements a scheduling method according to the present invention.
[Fig. 2] Fig. 2 is a diagram for explaining a pilot-signal scheduling method.
[Fig. 3] Fig. 3 is a functional block diagram of a base station and user equipment.
[Fig. 4] Fig. 4 is a diagram for explaining operation in the case that pilot-signal transmission timing of user equipment overlaps data-transmission timing of other user equipment.
[Fig. 5] Fig. 5 is a diagram for explaining an exemplary chunk usage.
[Fig. 6] Fig. 6 is a diagram for explaining another exemplary chunk usage.
[Fig. 7] Fig. 7 is a diagram for explaining a pilot-signal scheduling method used in a radio system that is on study in the 3GPP.

### EXPLANATIONS OF LETTERS OR NUMERALS

- 1-1, 1-2, 1-3, 1-n: User equipment (UE)
- 11: Base station
- 21: Scheduling unit
- 22: Modulating/transmitting unit
- 23: Receiving/demodulating unit
- 24: Quality measuring unit
- 25: Data receiving unit
- 31: Receiving/demodulating unit
- 32: Scheduling-information analyzing unit
- 33: Pilot/data generating unit
- 34: Modulating/transmitting unit
- 35: Data buffer unit

### BEST MODE(S) FOR CARRYING OUT THE INVENTION

Exemplary embodiments of a scheduling method according to the present invention are described in detail below with reference to the accompanying drawings. The present invention is not limited to these embodiments.

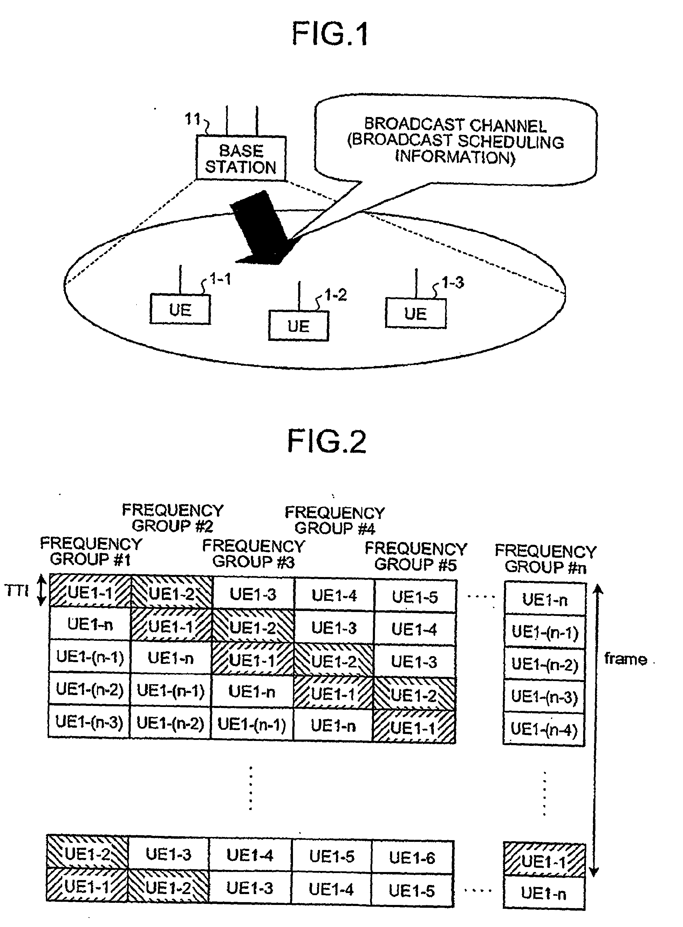

Fig. 1 is a diagram for explaining the structure of a radio communications system that implements the scheduling method according to the present invention. For example, there are a plurality of terminals (user equipment: UE) 1-1, 1-2, 1-3, ..., 1-n and a base station 11 in the system. The base station 11 notifies the user equipment 1-1 to 1-3 of pilot-signal scheduling information via a common channel (for example, a broadcast channel). Although in an example of Fig. 1, the scheduling information is broadcasted via the common channel, it is allowable to notify each user equipment of common scheduling information via an individual channel of the user equipment.

The pilot-signal scheduling method using the above system is described. Fig. 2 is a diagram for explaining the pilot-signal scheduling method according to the present embodiment. More specifically, pilot-signal transmission timing of each UE (1-1 to 1-n) (equivalent to later-described pilot-signal transmission position) is scheduled to avoid collisions.

The 3GPP defines a unit of time called TTI (Transmission Time Interval) and another unit called Frame constituted of a plurality of TTIs. With respect to the frequency axis direction, frequency bandwidth that is prepared as a system band is divided into a plurality of groups. One frequency group can be made up from a single sub-channel, i.e., a unit of frequency, or a plurality of sub-channels.

In an example shown in Fig. 2, the UE 1-1 transmits a pilot signal at frequency group #1 in an initial time based on a later-described transition pattern that is based on the unit of time. After that, the UE 1-1 transmits a pilot signal, transiting to an adjacent frequency group each TTI after another. The UE 1-2, in contrast to the UE 1-1, transmits a pilot signal at frequency group #2 in the initial time. After that, the UE 1-2 transmits a pilot signal, transiting to an adjacent frequency group each TTI after another in a manner similar to the UE 1-1. The UE 1-3, the UE 1-4, ... transmits a pilot signal starting from a different position, transiting to an adjacent frequency group each TTI.

The base station 11 specifies frequency group number, cycle and time of pilot-signal transmission from each UE. The base station 11 specifies these items of information by first notifying each UE of a transition pattern for a specific period (TTI-based frequency transition of the UE 1-1: #1, #2, ... #n, TTI-based frequency transition of the UE 1-2: #2, #3, ... #n, #1, ...), and then notifying each UE of another transition pattern for a next period. The base station 11 repeats notification of a different transition pattern for each period. The items of information need not be necessarily specified in the above manner. For example, the base station 11 can specify them by repeatedly notifying the same transition pattern every predetermined period.

Although each UE transits to an adjacent frequency group at each TTI in the above example, it is allowable for UE to stay at the same frequency group over a plurality of TTIs, or to transit to not the adjacent frequency group but a spaced frequency group. It is also allowable to provide a time zone within which no pilot signal is to be transmitted from any UE. The time and the cycle about a pilot signal to be transmitted and a time zone within which no pilot signal is to be transmitted are specified by the base station.

As described above, the base station 11 specifies time for switching to a next frequency, cycle, and target frequency group number with respect to a pilot signal to be transmitted from each UE. This makes it possible to prevent collisions between pilot signals. Moreover, because the base station 11 knows which timing each UE transmits a pilot signal, there is no need of a special unit for identifying a source UE of a pilot signal upon receipt of the pilot signal.

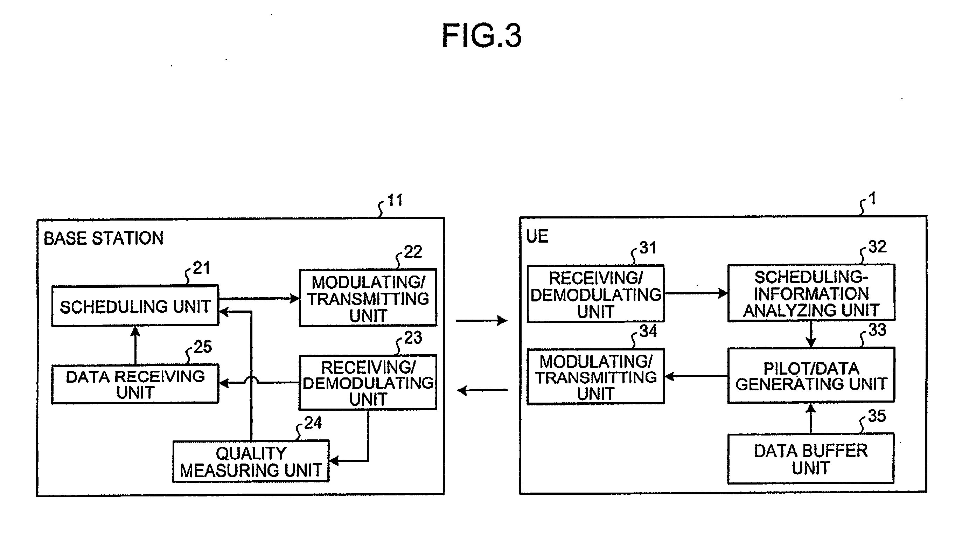

Given below is an explanation of the configuration and the operation for the base station and the UE to perform the above-described scheduling process. Fig. 3 is a functional block diagram of the base station 11 and the UE 1 (equivalent to the UE 1-1 to 1-n described above). For example, the base station 11 includes a scheduling unit 21, a modulating/transmitting unit 22, a receiving/demodulating unit 23, a quality measuring unit 24, and a data receiving unit 25; the UE 1 includes a receiving/demodulating unit 31, a scheduling-information analyzing unit 32, a pilot/data generating unit 33, a modulating/transmitting unit 34, and a data buffer unit 35.

As shown in Fig. 3, the scheduling unit 21 of the base station 11 performs scheduling about a pilot-signal transmission position (time for switching to a next frequency, cycle, and target frequency group number) and scheduling about the data-transmission position (time for switching to a next frequency, cycle, and target frequency group number). The base station 11 then notifies the UE 1 of the scheduling information via the modulating/transmitting unit 22.

In the UE 1, the receiving/demodulating unit 31 receives the scheduling information, and then the scheduling-information analyzing unit 32 determines the pilot-signal transmission position. The pilot-signal transmission position, which is obtained as a result of the analysis, is sent to the pilot/data generating unit 33. The pilot/data generating unit 33 generates a pilot signal with a specified timing and a specified frequency band based on the received pilot-signal transmission position. After that, the modulating/transmitting unit 34 transmits the generated pilot signal to the base station 11. When the data-transmission position from the base station 11 is received, the pilot/data generating unit 33 reads data from the data buffer unit 35, and transmits transmission data that is generated by adding necessary header information to the read data to the base station 11 via the modulating/transmitting unit 34.

The receiving/demodulating unit 23 of the base station 11 receives signals from the UE 1. When, for example, the receiving/demodulating unit 23 receives a pilot signal, the quality measuring unit 24 measures reception quality from the pilot signal. The reception quality is measured by receiving-signal intensity, a ratio of a sum of interferential-wave power and thermal-noise power to a desired-wave power, or the like. After that, a result of the measurement is sent to the scheduling unit 21. The scheduling unit 21 performs communication-resource allocating process depending on whether the quality is improved or deteriorated. When the base station 11 receives data from the UE 1, the data receiving unit 25 deletes the header information from the data, and sends the data without the header information to an upper layer.

Given below is an explanation of the operation in a case that pilot-signal transmission timing of specific UE overlaps data-transmission timing of other UE.

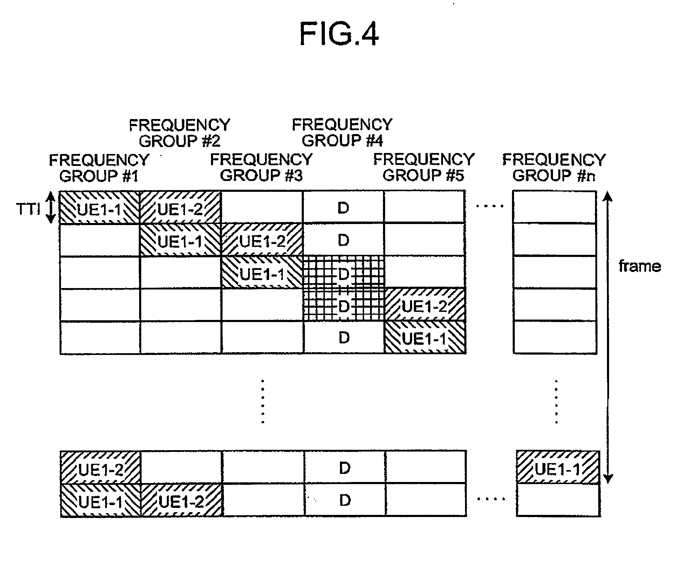

Fig. 4 is a diagram for explaining operation in the case that pilot-signal transmission timing of, for example, the UE 1-1 and 1-2 overlaps data-transmission timing of other UE. The frequency group #4 is allocated for transmission of data from the other UE. After transmitting a pilot signal at the frequency group #3, the UE 1-1, which is supposed to transmit a pilot signal at the frequency group #4, does not transmit a pilot signal at the timing because the UE 1-1 knows that the frequency group #4 is allocated for the transmission of data from the other UE. The UE 1-2 also does not transmits a pilot signal at the frequency group #4. Because a plurality of UE is notified of data-transmission timing of other UE (radio-resource allocation information), as well as pilot-signal scheduling information, via the channel common to the UE, each UE can easily obtain information on such transmission timing. Therefore, each UE can determine whether pilot-signal transmission timing thereof overlaps data-transmission timing of other UE with the scheduling-information analyzing unit 32. Thus, the UE can avoid collisions between a pilot signal transmitted therefrom and data transmitted from other UE.

Given below is an explanation of usage of chunk, which is a unit of scheduling defined by the TTI and the frequency group.

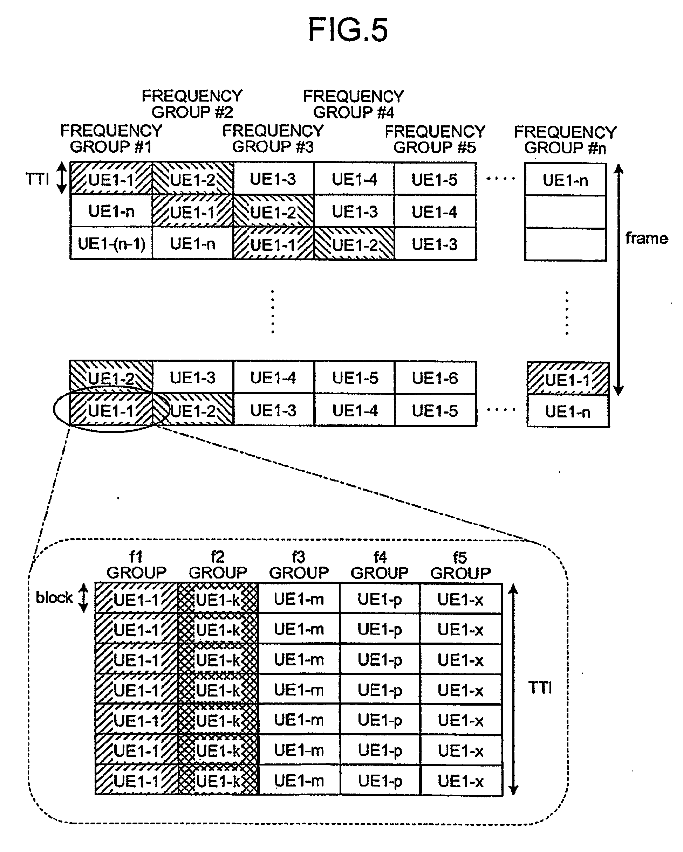

Fig. 5 is a diagram for explaining an exemplary usage of the frequency groups (chunk). The single TTI is made up of a plurality of units called Block according to the study by the 3GPP. In an example shown in Fig. 5, each UE (UE 1-1, 1-k, 1-m, 1-p, and 1-x) is allocated to one of frequency sub-groups (any one of f1 group to f5 group), and a packet is transmitted with all Blocks making up the TTI. According to the method, energy for receiving the pilot signal can be saved much, which makes it possible to improve accuracy in measuring the line quality.

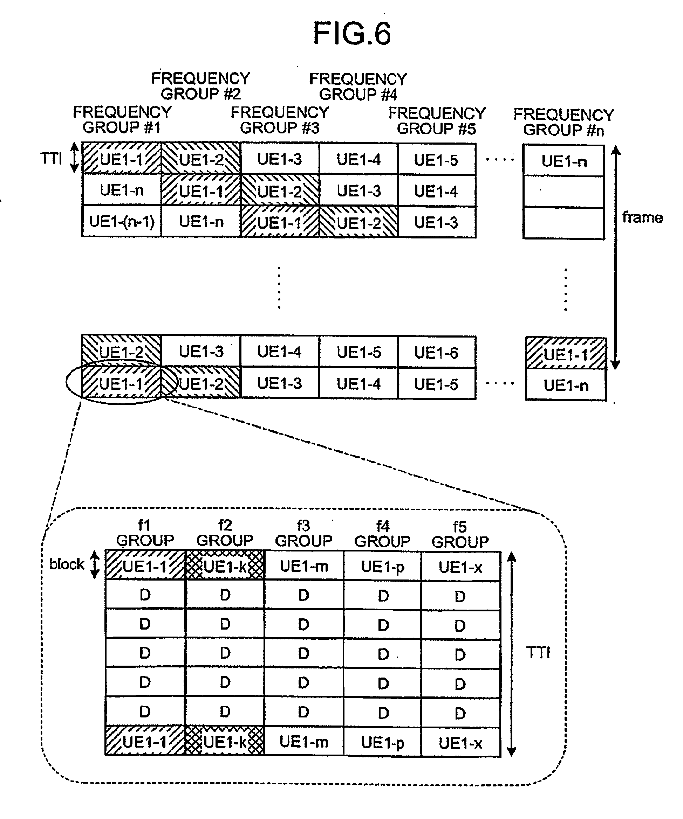

Fig. 6 is a diagram for explaining another exemplary chunk usage different from the usage shown in Fig. 5. In the example shown in Fig. 6, part of Blocks that constitutes the TTI is allocated for transmission of a pilot signal, and the remaining Blocks are allocated for transmission of data from one or a plurality of UE. Because a large part of the communication resource is allocated for transmission of data according to the method, it is possible to increase throughput of data transmission. The region allocated for transmission of data from other UE can be allocated for transmission of a pilot signal from other UE.

### INDUSTRIAL APPLICABILITY

As set forth hereinabove, the pilot-signal scheduling method according to the present invention is effectively used in a radio communications system, and particularly suitable for a radio communications system in which a base station measures reception quality based on a pilot signal received from a terminal in its coverage area and allocates radio resources based on a result of the measuring.

## Claims

1. A pilot-signal scheduling method applied to a radio communications system in which a base station measures reception quality based on a pilot signal received from a terminal in a service area of the base station, the pilot-signal scheduling method comprising, at the base station:
generating scheduling information that specifies pilot-signal transmission time and a frequency band at which each terminal transmits a pilot signal such that transmissions from terminals in the service area will not overlap, the pilot-signal transmission time including time at which each terminal starts transmitting pilot signals and an interval at which each terminal transmits pilot signals; and
transmitting the scheduling information to the terminal.

2. The pilot-signal scheduling method according to claim 1, wherein the scheduling information includes information on a time zone during which each terminal transmits no pilot signal.

3. The pilot-signal scheduling method according to claim 1, wherein the scheduling information is transmitted via a common channel or an individual channel of each terminal to all terminals in the service area.

4. The pilot-signal scheduling method according to claim 1, wherein
frequency bands with a predetermined bandwidth are grouped into a plurality of frequency groups, and
the generating includes dividing one of the frequency groups specified as the frequency band into a plurality of sub-groups, and allocating each of the sub-groups for transmission of a pilot signal from a different terminal.

5. The pilot-signal scheduling method according to claim 1, wherein
frequency bands with a predetermined bandwidth are grouped into a plurality of frequency groups, and
the generating includes dividing one of the frequency groups specified as the frequency band into a plurality of sub-groups, and allocating part of the sub-groups for pilot signal transmission and allocating remaining part of the sub-groups for data transmission.

6. The pilot-signal scheduling method according to claim 1, further comprising, at the terminal:
analyzing the scheduling information; and
transmitting a pilot signal based on the pilot-signal transmission time and the frequency band specified by the scheduling information.

7. The pilot-signal scheduling method according to claim 6, wherein the analyzing includes determining, when the scheduling information contains information on allocation of radio resource for data transmission, whether transmission of a pilot signal from the terminal will overlap transmission of data from another terminal, the pilot-signal scheduling method further comprising:
transmitting no pilot signal when transmission of the pilot signal will overlap transmission of data from another terminal.

8. A base station that performs scheduling of pilot signals received from a terminal (1-1, 1-2, 1-3) in a service area of the base station (11), the base station (11) comprising:
a scheduling unit (21) that generates scheduling information that specifies pilot-signal transmission time and a frequency band at which each terminal (1-1, 1-2, 1-3) transmits a pilot signal such that transmissions from terminals (1-1, 1-2, 1-3) in the service area will not overlap, the pilot-signal transmission time including time at which each terminal (1-1, 1-2, 1-3) starts transmitting pilot signals and an interval at which each terminal (1-1, 1-2, 1-3) transmits pilot signals; and
a transmitting unit (22) that transmits the scheduling information to the terminal (1-1, 1-2, 1-3).

9. The base station according to claim 8, wherein the scheduling information includes information on a time zone during which each terminal (1-1, 1-2, 1-3) transmits no pilot signal.

10. The base station according to claim 8, wherein the scheduling information is transmitted via a common channel or an individual channel of each terminal to all terminals (1-1, 1-2, 1-3) in the service area.

11. The base station according to claim 8, wherein
frequency bands with a predetermined bandwidth are grouped into a plurality of frequency groups, and
the scheduling unit (21) divides one of the frequency groups specified as the frequency band into a plurality of sub-groups, and allocating each of the sub-groups for transmission of a pilot signal from a different terminal (1-1, 1-2, 1-3).

12. The base station according to claim 8, wherein
frequency bands with a predetermined bandwidth are grouped into a plurality of frequency groups, and
the scheduling unit (21) divides one of the frequency groups specified as the frequency band into a plurality of sub-groups, and allocating part of the sub-groups for pilot signal transmission and allocating remaining part of the sub-groups for data transmission.

13. A terminal in a radio communications system including a base station (11) that generates scheduling information specifying pilot-signal transmission time and a frequency band at which each terminal (1-1, 1-2, 1-3) transmits a pilot signal such that transmissions from terminals (1-1, 1-2, 1-3) in a service area of the base station (11) will not overlap, the pilot-signal transmission time including time at which each terminal (1-1, 1-2, 1-3) starts transmitting pilot signals and an interval at which each terminal (1-1, 1-2, 1-3) transmits pilot signals, and that transmits the scheduling information to the terminal (1-1, 1-2, 1-3), wherein the terminal (1-1, 1-2, 1-3) receives, when present in the service area, the scheduling information from the base station (11), the terminal comprising:
an information analyzing unit (32) that analyzes the scheduling information; and
a transmitting unit (34) that transmits a pilot signal based on the pilot-signal transmission time and the frequency band specified by the scheduling information.

14. The terminal according to claim 13, wherein
the analyzing unit (32) determines, when the scheduling information contains information on allocation of radio resource for data transmission, whether transmission of a pilot signal from the terminal (1-1) will overlap transmission of data from another terminal (1-2, 1-3), and
the transmitting unit (34) transmits no pilot signal when transmission of the pilot signal will overlap transmission of data from another terminal (1-2, 1-3).

## Patentansprüche

1. Pilotsignal-Zeitplanungsverfahren, das auf ein Funkkommunikationssystem angewendet wird, in dem eine Basisstation eine Empfangsqualität auf Grundlage eines Pilotsignals misst, das von einem Endgerät in einem Versorgungsbereich der Basisstation her eingeht, wobei das Pilotsignal-Zeitplanungsverfahren an der Basisstation umfasst:
Generieren von Zeitplanungsinformation, die die Pilotsignalübertragungszeit und ein Frequenzband genau festlegt, in der/dem jedes Endgerät ein Pilotsignal überträgt, so dass Übertragungen von Endgeräten in dem Versorgungsbereich sich nicht überschneiden, wobei die Pilotsignalübertragungszeit eine Zeit, zu der jedes Endgerät mit dem Übertragen von Pilotsignalen beginnt, und einen Zeitabschnitt umfasst, zu dem jedes Endgerät Pilotsignale überträgt; und
Übertragen der Zeitplanungsinformation an das Endgerät.

2. Pilotsignal-Zeitplanungsverfahren nach Anspruch 1, wobei die Zeitplanungsinformation Information über einen Zeitbereich enthält, während dem jedes Endgerät kein Pilotsignal überträgt.

3. Pilotsignal-Zeitplanungsverfahren nach Anspruch 1, wobei die Zeitplanungsinformation über einen gemeinsamen Kanal oder einen individuellen Kanal jedes Endgeräts an alle Endgeräte im Versorgungsbereich übertragen wird.

4. Pilotsignal-Zeitplanungsverfahren nach Anspruch 1, wobei
Frequenzbänder mit einer vorbestimmten Bandbreite zu mehreren Frequenzgruppen zusammengefasst werden, und
das Generieren umfasst, eine der als Frequenzband festgelegten Frequenzgruppen in mehrere Teilgruppen zu unterteilen und jede der Teilgruppen zur Übertragung eines Pilotsignals von einem anderen Endgerät zuzuteilen.

5. Pilotsignal-Zeitplanungsverfahren nach Anspruch 1, wobei
Frequenzbänder mit einer vorbestimmten Bandbreite zu mehreren Frequenzgruppen zusammengefasst werden, und
das Generieren umfasst, eine der als Frequenzband festgelegten Frequenzgruppen in mehrere Teilgruppen zu unterteilen und einen Teil der Teilgruppen zur Pilotsignalübertragung zuzuteilen, und den übrigen Teil der Teilgruppen zur Datenübertragung zuzuteilen.

6. Pilotsignal-Zeitplanungsverfahren nach Anspruch 1, darüber hinaus am Endgerät umfassend:
Analysieren der Zeitplanungsinformation; und
Übertragen eines Pilotsignals auf Grundlage der Pilotsignalübertragungszeit und des Frequenzbands, die/das durch die Zeitplanungsinformation festgelegt sind.

7. Pilotsignal-Zeitplanungsverfahren nach Anspruch 6, wobei das Analysieren umfasst, zu bestimmen, wenn die Zeitplanungsinformation Information über eine Funkbetriebsmittelzuteilung zur Datenübertragung enthält, ob sich die Übertragung eines Pilotsignals von dem Endgerät mit einer Datenübertragung von einem anderen Endgerät überschneiden wird, wobei das Pilotsignal-Zeitplanungsverfahren darüber hinaus umfasst:
kein Pilotsignal zu übertragen, wenn sich eine Übertragung des Pilotsignals mit einer Datenübertragung von einem anderen Endgerät überschneiden wird.

8. Basisstation, die eine Zeitplanung von Pilotsignalen durchführt, die von einem Endgerät (1-1, 1-2, 1-3) in einem Versorgungsbereich der Basisstation (11) her eingehen, wobei die Basisstation (11) umfasst:
eine Zeitplanungseinheit (21), die Zeitplanungsinformation generiert, die eine Pilotsignalübertragungszeit und ein Frequenzband festlegt, in der/dem jedes Endgerät (1-1, 1-2, 1-3) ein Pilotsignal überträgt, so dass sich Übertragungen von Endgeräten (1-1, 1-2, 1-3) in dem Versorgurigsbereich nicht überschneiden, wobei die Pilotsignalübertragungszeit eine Zeit umfasst, zu der jedes Endgerät (1-1, 1-2, 1-3) mit dem Übertragen von Pilotsignalen beginnt, und einen Zeitabschnitt umfasst, zu dem jedes Endgerät (1-1, 1-2, 1-3) Pilotsignale überträgt; und
eine Übertragungseinheit (22), die die Zeitplanungsinformation an das Endgerät (1-1, 1-2, 1-3) überträgt.

9. Basisstation nach Anspruch 8, wobei die Zeitplanungsinformation Information über einen Zeitbereich enthält, während dem jedes Endgerät (1-1, 1-2, 1-3) kein Pilotsignal überträgt.

10. Basisstation nach Anspruch 8, wobei die Zeitplanungsinformation über einen gemeinsamen Kanal oder einen individuellen Kanal jedes Endgeräts an alle Endgeräte (1-1, 1-2, 1-3) im Versorgungsbereich übertragen wird.

11. Basisstation nach Anspruch 8, wobei
Frequenzbänder mit einer vorbestimmten Bandbreite zu mehreren Frequenzgruppen zusammengefasst werden, und
die Zeitplanungseinheit (21) eine der als Frequenzband festgelegten Frequenzgruppen in mehrere Teilgruppen unterteilt und jede der Teilgruppen zur Übertragung eines Pilotsignals von einem anderen Endgerät (1-1, 1-2, 1-3) zuteilt.

12. Basisstation nach Anspruch 8, wobei
Frequenzbänder mit einer vorbestimmten Bandbreite zu mehreren Frequenzgruppen zusammengefasst werden, und
die Zeitplanungseinheit (21) eine der als Frequenzband festgelegten Frequenzgruppen in mehrere Teilgruppen unterteilt und einen Teil der Teilgruppen zur Pilotsignalübertragung zuteilt und den übrigen Teil der Teilgruppen zur Datenübertragung zuteilt.

13. Endgerät in einem Funkkommunikationssystem, das eine Basisstation (11) umfasst, die Zeitplanungsinformation generiert, die eine Pilotsignalübertragungszeit und ein Frequenzband festlegt, in der/dem jedes Endgerät (1-1, 1-2, 1-3) ein Pilotsignal überträgt, so dass sich Übertragungen von Endgeräten (1-1, 1-2, 1-3) in einem Versorgungsbereich der Basisstation (11) nicht überschneiden, wobei die Pilotsignalübertragungszeit eine Zeit, zu der jedes Endgerät (1-1, 1-2, 1-3) mit dem Übertragen von Pilotsignalen beginnt, und einen Zeitabschnitt umfasst, zu dem jedes Endgerät (1-1, 1-2, 1-3) Pilotsignale überträgt, und die die Zeitplanungsinformation an das Endgerät (1-1, 1-2, 1-3) überträgt, wobei das Endgerät (1-1, 1-2, 1-3), wenn es sich im Versorgungsbereich befindet, die Zeitplanungsinformation von der Basisstation (11) empfängt, wobei das Endgerät umfasst:
eine Informationsanalysiereinheit (32), die die Zeitplanungsinformation analysiert; und
eine Übertragungseinheit (34), die ein Pilotsignal auf Grundlage der Pilotsignalübertragungszeit und des Frequenzbands überträgt, die/das durch die Zeitplanungsinformation festgelegt sind.

14. Endgerät nach Anspruch 13, wobei
die Analysiereinheit (32) bestimmt, wenn die Zeitplanungsinformation Information über eine Funkbetriebsmittelzuteilung zur Datenübertragung enthält, ob sich die Übertragung eines Pilotsignals von dem Endgerät (1-1) mit einer Datenübertragung von einem anderen Endgerät (1-2,1-3) überschneiden wird, und
die Übertragungseinheit (34) kein Pilotsignal überträgt, wenn sich eine Übertragung des Pilotsignals mit einer Datenübertragung von einem anderen Endgerät (1-2, 1-3) überschneiden wird.

## Revendications

1. Procédé de planification de signal pilote appliqué à un système de communication radio dans lequel une station de base mesure la qualité de réception sur la base d'un signal pilote reçu depuis un terminal dans une zone de service de la station de base, le procédé de planification de signal pilote comportant, à la station de base :
la génération d'informations de planification spécifiant l'heure d'émission de signal pilote et une bande de fréquence à laquelle chaque terminal émet un signal pilote de telle sorte que des émissions provenant de terminaux dans la zone de service ne se chevaucheront pas, l'heure d'émission de signal pilote incluant l'heure à laquelle chaque terminal commence à émettre des signaux pilotes et un intervalle auquel chaque terminal émet des signaux pilotes ; et
l'émission des informations de planification vers le terminal.

2. Le procédé de planification de signal pilote selon la revendication 1, où les informations de planification incluent des informations sur une plage horaire pendant laquelle chaque terminal n'émet aucun signal pilote.

3. Le procédé de planification de signal pilote selon la revendication 1, où les informations de planification sont émises via un canal commun ou un canal individuel de chaque terminal vers tous les terminaux dans la zone de service.

4. Le procédé de planification de signal pilote selon la revendication 1, où
des bandes de fréquence d'une largeur de bande prédéterminée sont groupées en une pluralité de groupes de fréquence, et
la génération inclut la division de l'un des groupes de fréquence spécifié comme étant la bande de fréquence en une pluralité de sous-groupes, et l'affectation de chacun des sous-groupes à l'émission d'un signal pilote provenant d'un terminal différent.

5. Le procédé de planification de signal pilote selon la revendication 1, où
des bandes de fréquence d'une largeur de bande prédéterminée sont groupées en une pluralité de groupes de fréquence, et
la génération inclut la division de l'un des groupes de fréquence spécifié comme étant la bande de fréquence en une pluralité de sous-groupes, et l'affectation d'une partie des sous-groupes à l'émission de signal pilote et l'affectation de la partie restante des sous-groupes à l'émission de données.

6. Le procédé de planification de signal pilote selon la revendication 1, comportant en outre, au terminal :
l'analyse des informations de planification ; et
l'émission d'un signal pilote sur la base de l'heure d'émission de signal pilote et de la bande de fréquence spécifiée par les informations de planification.

7. Le procédé de planification de signal pilote selon la revendication 6, où l'analyse inclut le fait de déterminer, quand les informations de planification contiennent des informations sur l'affectation de ressources radio à l'émission de données, si l'émission d'un signal pilote depuis le terminal chevauchera l'émission de données depuis un autre terminal, le procédé de planification de signal pilote comportant en outre :
l'émission d'aucun signal pilote quand l'émission du signal pilote chevauchera l'émission de données depuis un autre terminal.

8. Station de base mettant en oeuvre la planification de signaux pilotes reçus depuis un terminal (1-1, 1-2, 1-3) dans une zone de service de la station de base (11), la station de base (11) comportant :
une unité de planification (21) qui génère des informations de planification spécifiant l'heure d'émission de signal pilote et une bande de fréquence à laquelle chaque terminal (1-1, 1-2, 1-3) émet un signal pilote de telle sorte que des émissions provenant de terminaux (1-1, 1-2, 1-3) dans la zone de service ne se chevaucheront pas, l'heure d'émission de signal pilote incluant l'heure à laquelle chaque terminal (1-1, 1-2, 1-3) commence à émettre des signaux pilotes et un intervalle auquel chaque terminal (1-1, 1-2, 1-3) émet des signaux pilotes ; et
une unité d'émission (22) qui émet les informations de planification vers le terminal (1-1, 1-2, 1-3).

9. La station de base selon la revendication 8, où les informations de planification incluent des informations sur une plage horaire pendant laquelle chaque terminal (1-1, 1-2, 1-3) n'émet aucun signal pilote.

10. La station de base selon la revendication 8, où les informations de planification sont émises via un canal commun ou un canal individuel de chaque terminal vers tous les terminaux (1-1, 1-2, 1-3) dans la zone de service.

11. La station de base selon la revendication 8, où
des bandes de fréquence d'une largeur de bande prédéterminée sont groupées en une pluralité de groupes de fréquence, et
l'unité de planification (21) divise l'un des groupes de fréquence spécifié comme étant la bande de fréquence en une pluralité de sous-groupes, et affecte chacun des sous-groupes à l'émission d'un signal pilote provenant d'un terminal (1-1, 1-2, 1-3) différent.

12. La station de base selon la revendication 8, où
des bandes de fréquence d'une largeur de bande prédéterminée sont groupées en une pluralité de groupes de fréquence, et
l'unité de planification (21) divise l'un des groupes de fréquence spécifié comme étant la bande de fréquence en une pluralité de sous-groupes, et affecte une partie des sous-groupes à l'émission de signal pilote et affecte la partie restante des sous-groupes à l'émission de données.

13. Terminal dans un système de communication radio incluant une station de base (11) qui génère des informations de planification spécifiant une heure d'émission de signal pilote et une bande de fréquence à laquelle chaque terminal (1-1, 1-2, 1-3) émet un signal pilote de telle sorte que des émissions provenant de terminaux (1-1, 1-2, 1-3) dans une zone de service de la station de base (11) ne se chevaucheront pas, l'heure d'émission de signal pilote incluant l'heure à laquelle chaque terminal (1-1, 1-2, 1-3) commence à émettre des signaux pilotes et un intervalle auquel chaque terminal (1-1, 1-2, 1-3) émet des signaux pilotes, et qui émet les informations de planification vers le terminal (1-1, 1-2, 1-3), où le terminal (1-1, 1-2, 1-3) reçoit, quand il est présent dans la zone de service, les informations de planification depuis la station de base (11), le terminal comportant :
une unité d'analyse d'informations (32) qui analyse les informations de planification ; et
une unité d'émission (34) qui émet un signal pilote sur la base de l'heure d'émission de signal pilote et de la bande de fréquence spécifiée par les informations de planification.

14. Le terminal selon la revendication 13, où
l'unité d'analyse (32) détermine, quand les informations de planification contiennent des informations sur l'affectation de ressources radio à l'émission de données, si l'émission d'un signal pilote depuis le terminal (1-1) chevauchera l'émission de données depuis un autre terminal (1-2, 1-3), et
l'unité d'émission (34) n'émet aucun signal pilote quand l'émission du signal pilote chevauchera l'émission de données depuis un autre terminal (1-2, 1-3).
